# EUROPÄISCHE PATENTANMELDUNG

(11) **EP 0 567 688 A1**
(43) Veröffentlichungstag der Anmeldung: **03.11.1993**
(21) Anmeldenummer: 92116449.7
(22) Anmeldetag: 25.09.1992
(51) Int. Cl.: F04D 25/06, F04D 13/06, F04D 3/00, H02K 7/14, H02K 29/00, H02K 1/27

(54) **Fluidfördervorrichtung, insbesondere Lüfter**

(30) Priorität: 30.04.1992 DE 4214160
(71) Anmelder: Heidelberg, Götz, D-82319 Starnberg (DE); Stuckmann, Otto, D-45657 Recklinghausen (DE)
(72) Erfinder: Heidelberg, Götz, D-82319 Starnberg (DE); Stuckmann, Otto, D-45657 Recklinghausen (DE)
(74) Vertreter: Masch, Karl Gerhard, Dr.

(57) **Zusammenfassung**

Eine Fluidfördervorrichtung, insbesondere ein Lüfter, besteht aus einem Strömungskanalgehäuse (1) mit kreiszylindrischem Querschnitt und einem um die Achse (3) des Strömungskanalgehäuses (1) drehbar gelagerten, von einem Elektromotor (4) unmittelbar angetrieben Propellerorgan (2). Bei größeren elektrischen Leistungen von 10 kW und mehr ergeben sich optimale Verhältnisse, wenn der Elektromotor (4) als Innenläufermotor mit kreisringförmigem, am Außenumfang des Propellerorgans (2) angeordneten Rotor (5) und mit bündig in das Strömungskanalgehäuse (1) integriertem Stator (6) ausgebildet ist.

## Beschreibung

Die Erfindung betrifft eine Fluidfördervorrichtung, insbesondere einen Lüfter, bestehend aus einem Strömungskanalgehäuse mit kreiszylindrischem Querschnitt und einem um die Achse des Strömungskanalgehäuses drehbar gelagerten, von einem Elektromotor unmittelbar angetriebenen Propellerorgan. - Fluidfördervorrichtung meint im Rahmen der Erfindung eine Vorrichtung zum Fördern bzw. Vorbewegen eines beliebigen Fluids. Handelt es sich bei dem Fluid um ein Gas oder Gasgemisch, ist die Vorrichtung insbesondere ein Lüfter; handelt es sich bei dem Fluid um eine Flüssigkeit kann die Vorrichtung beispielsweise eine Pumpe oder ein Rührwerk sein.

Fluidfördervorrichtungen der eingangs genannten Art in Form von Lüftern sind nur im Bereich verhältnismäßig niedriger elektrischer Leistungen bekannt. Für elektrische Leistungen von 10 kW und mehr wird der Elektromotor regelmäßig über ein den Wirkungsgrad minderndes Getriebe an die Nabe des Propellerorgans angeflanscht. Solche Lüfteraggregate sind schwer sowie voluminös und erfordern daher besonders feste Fundamente. Durch die nabenfluchtende Anordnung von Getriebe und Elektromotor wird auch das Anströmverhalten negativ beeinflußt. Außerdem stört der nicht unbeachtliche Geräuschpegel solcher Lüfteraggregate.

Der Erfindung liegt die Aufgabe zugrunde, eine Fluidfördervorrichtung der eingangs genannten Art auch bei hohen elektrischen Leistungen von 10 kW und mehr kompakter, leichter und geräuschärmer zu bauen.

Die erfindungsgemäße Lösung dieser Aufgabe besteht darin, daß der Elektromotor als Innenläufermotor mit kreisringförmigem, am Außenumfang des Propellerorgans angeordneten Rotor und mit bündig in das Strömungskanalgehäuse integriertem Stator ausgebildet ist.

Durch die konstruktive Verschmelzung von Propellerorgan sowie Strömungskanalgehäuse einerseits und Elektromotor andererseits wird zunächst bei gleichzeitigem Verzicht auf ein zwischengeschaltetes Getriebe eine erhebliche Verminderung des Systemgewichtes erreicht, so daß die zugeordneten Fundamente einen beachtlich geringeren Aufwand erfordern. Erfindungsgemäße Fluidfördervorrichtungen lassen sich daher auch erheblich einfacher in bestehende Bauwerke ohne aufwendige Verstärkungen einbauen. Da nur noch der ringförmige Rotor innerhalb des Strömungskanalgehäuses liegt, wird der freie Strömungsquerschnitt vergrößert, was unter zusätzlicher Berücksichtigung des fehlenden Getriebes einen besseren Wirkungsgrad und eine niedrigere Geräuschemmission zur Folge hat.

Für die weitere Ausgestaltung bestehen im Rahmen der Erfindung mehrere Möglichkeiten. So ist nach bevorzugter Ausführungsform der Rotor mit den Blattenden des Propellerorgans verbunden; das kann durch unmittelbare Verschraubung, aber auch durch in das Propellerorgan integrierte Konstruktionsteile erfolgen. Für die Lagerung des mit dem Rotor vereinigten Propellerorgans gibt es zwei gleichwertige Lösungen, nämlich eine Nabenlagerung und/oder eine Außenringlagerung. In der Praxis besonders bewährt hat sich eine Ausführungsform des Elektromotors als dauermagnetisch erregter Synchronmotor mit elektrischer Kommutierung des Statorstromes, besonders geeignet sind in diesem Zusammenhang Elektromotoren, die nach dem Flußsammlerprinzip zur Erhöhung der dauermagnetischen Flußdichte im Luftspalt aufgebaut sind; solche Motoren sind sehr gut regelbar, so daß auch die Forderung nach der Einstellbarkeit der Kennlinie des Systems erfüllt ist. Der genannte Elektromotor kann auch mit kleinem Luftspalt und zugleich hoher Luftspaltgeschwindigkeit ausgeführt werden, beides führt zu einer Erhöhung des Wirkungsgrades. Um die Zuverlässigkeit des Gesamtsystems zu erhöhen, empfiehlt es sich, Rotor und Stator hermetisch zu kapseln, so daß aggressive Medien keine Angriffspunkte finden. Günstig ist es ferner, wenn der Stator mit einer Flüssigkeitskühleinrichtung versehen ist; als Kühlmittel wird vorzugsweise Wasser verwendet, mit einem zündunfähigen Kühlmittel ist jedenfalls "explosionsgeschützte" Ausführung möglich. Das Strömungskanalgehäuse wird man vorzugsweise aus einem Ansaugteil, einem den Stator aufweisenden Motorgehäuseteil und einem Diffusorteil aufbauen, Ansaugteil und Diffusorteil sind nämlich als Standardteile handelsüblich. Das Motorgehäuseteil bzw. das Stromkanalgehäuse wird im Bereich des Stators zweckmäßigerweise aus Kunststoff gefertigt.

Im folgenden wird die Erfindung anhand einer ein Ausführungsbeispiel darstellenden Zeichnung näher erläutert. Es zeigen in einem schematischen Längsschnitt
- Fig. 1: eine erste Ausführungsform und
- Fig. 2: eine zweite Ausführungsform einer Fluidfördervorrichtung in Form eines Lüfters.

Die in den Figuren dargestellten Vorrichtungen bzw. Lüfter bestehen in ihrem grundsätzlichen Aufbau aus einem Strömungskanalgehäuse 1 mit kreiszylindrischem Querschnitt und einem Propellerorgan 2, das um die Achse 3 des Strömungskanalgehäuses 1 drehbar gelagert und von einem Elektromotor 4 unmittelbar, d. h. ohne Zwischenschaltung eines Getriebes angetrieben ist.

Dieser Elektromotor 4 ist als Innenläufermotor mit kreisringförmigem, am Außenumfang des Propellerorgans 2 angeordneten Rotor 5 und mit bündig in das Strömungskanalgehäuse 1 integriertem Stator 6 ausgebildet. Dabei ist der Rotor 5 mit den Blattenden des Propellerorgans 2 verbunden.

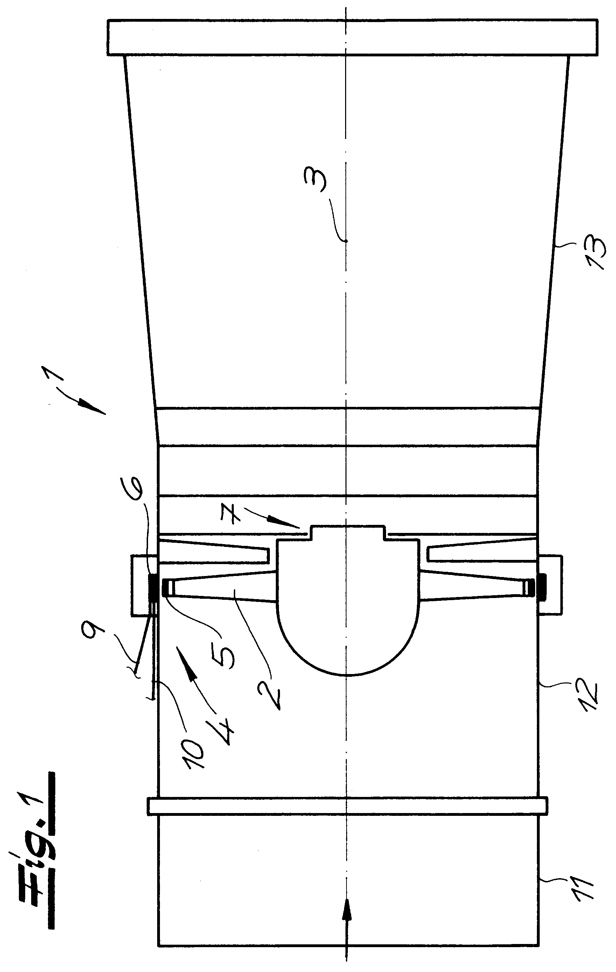

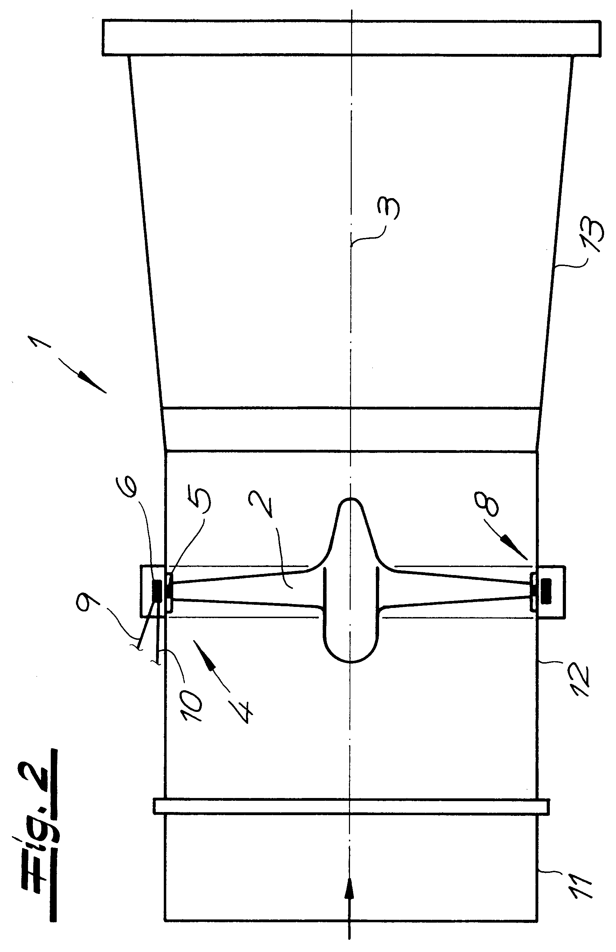

Bei der Ausführungsform nach Fig. 1 weist der Rotor 5 eine Nabenlagerung 7 auf. Bei der Ausführungsform nach Fig. 2 ist der Rotor 5 dagegen mit einer Außenringlagerung 8 versehen. In beiden Fällen ist jedenfalls der Elektromotor 4 als dauermagnetisch erregter Synchronmotor mit elektronischer Kommutierung des Statorstromes ausgeführt, welcher nach dem Flußsammlerprinzip zur Erhöhung der dauermagnetischen Flußdichte im Luftspalt aufgebaut ist.

Im einzelnen nicht erkennbar ist, daß sowohl der Rotor 5 als auch der Stator 6 hermetisch gekapselt sind. Der Stator 6 ist mit einer Flüssigkeitskühleinrichtung 9 versehen. Das entsprechende Teil des Strömungskanalgehäuses 1 weist damit praktisch nur zwei "Durchbrüche" auf, nämlich einmal die Kabel 10 zur Stromzufuhr und die Anschlüsse für die Flüssigkeitskühleinrichtung 9. Das Strömungskanalgehäuse 1 ist jedenfalls aus einem Ansaugteil 11, einem Motorgehäuseteil 12 und einem Diffusorteil 13 zusammengesetzt; Ansaugteil 11 und Diffusorteil 13 sind nämlich handelsüblich. Im Bereich des Stators 6 ist das Strömungskanalgehäuse 1 aus Kunststoff gefertigt.

## Patentansprüche

1. Fluidfördervorrichtung, insbesondere Lüfter, bestehend aus einem Strömungskanalgehäuse (1) mit kreiszylindrischem Querschnitt und einem um die Achse (3) des Strömungskanalgehäuses (1) drehbar gelagerten, von einem Elektromotor (4) unmittelbar angetriebenen Propellerorgan (2), **dadurch gekennzeichnet,** daß der Elektromotor (4) als Innenläufermotor mit kreisringförmigem, am Außenumfang des Propellerorgans (2) angeordneten Rotor (5) und mit bündig in das Strömungskanalgehäuse (1) integriertem Stator (6) ausgebildet ist.

2. Fluidfördervorrichtung nach Anspruch 1, dadurch gekennzeichnet, daß der Rotor (5) mit den Blattenden des Propellerorgans (2) verbunden ist.

3. Fluidfördervorrichtung nach Anspruch 1 oder 2, dadurch gekennzeichnet, daß der Rotor (5) eine Nabenlagerung (7) aufweist.

4. Fluidfördervorrichtung nach einem der Ansprüche 1 bis 3, dadurch gekennzeichnet, daß der Rotor (5) eine Außenringlagerung (8) aufweist.

5. Fluidfördervorrichtung nach einem der Ansprüche 1 bis 4, dadurch gekennzeichnet, daß der Elektromotor (4) als dauermagnetisch erregter Synchronmotor mit elektronischer Kommutierung des Statorstroms ausgeführt ist.

6. Fluidfördervorrichtung nach Anspruch 5, dadurch gekennzeichnet, daß der Elektromotor (4) nach dem Flußsammlerprinzip zur Erhöhung der dauermagnetischen Flußdichte im Luftspalt aufgebaut ist.

7. Fluidfördervorrichtung nach einem der Ansprüche 1 bis 6, dadurch gekennzeichnet, daß der Rotor (5) und der Stator (6) hermetisch gekapselt sind.

8. Fluidfördervorrichtung nach einem der Ansprüche 1 bis 7, dadurch gekennzeichnet, daß der Stator (6) mit einer Flüssigkeitskühleinrichtung (9) versehen ist.

9. Fluidfördervorrichtung nach einem der Ansprüche 1 bis 8, dadurch gekennzeichnet, daß das Strömungskanalgehäuse (1) aus einem Ansaugteil (11), einem Motorgehäuseteil (12) und einem Diffusorteil (13) zusammengesetzt ist.

10. Fluidfördervorrichtung nach einem der Ansprüche 1 bis 9, dadurch gekennzeichnet, daß das Strömungskanalgehäuse (1) im Bereich des Stators (6) aus Kunststoff gefertigt ist.
